# EUROPEAN PATENT APPLICATION

(11) **EP 3 373 271 A1**
(43) Date of publication of application: **12.09.2018**
(21) Application number: 18160151.9
(22) Date of filing: 06.03.2018
(51) Int. Cl.: G08G 1/16, B60W 50/16, B60W 50/14

(54) **ALERT SYSTEM AND DRIVING SUPPORT SYSTEM**

(30) Priority: 06.03.2017 JP 2017041602
(71) Applicant: Toyota Jidosha Kabushiki Kaisha, Aichi-Ken 471-8571 (JP)
(72) Inventor: MURATA, Hiroki, Aichi-ken, 471-8571 (JP); SHIMIZU, Akihiko, Aichi-ken, 471-8571 (JP)
(74) Representative: D Young & Co LLP

(57) **Abstract**

An alert system includes a first alert unit (21) that alerts a driver to at least one of a state relating to driving support and a state relating to steering in a tactile manner through a steering wheel (24), and a second alert unit (14) that alerts the driver to at least one of the states either in a tactile manner through a member other than the steering wheel (24) or in an audible or visual manner. Of these alert units (14, 21), the second alert unit (14) is activated when the driver is in a hands-off state in which the driver's hands are inferred to be off the steering wheel (24). Thus, it is possible to appropriately alert the driver to at least one of the states even when the driver is in the hands-off state.

## Description

### BACKGROUND OF THE INVENTION

### 1. Field of the Invention

The present invention relates to an alert system installed in a vehicle that provides driving support, and to a driving support system that provides driving support.

### 2. Description of Related Art

Japanese Patent Application Publication No. 2008-040621 (JP 2008-040621 A) describes an alert device that alerts a driver when the vehicle is highly likely to depart from the lane. This alert device includes first alert means that alerts the driver that the vehicle is highly likely to depart from the lane by vibrating a driver's seat or a steering wheel, and second alert means that alerts the driver by generating sound. In this alert device, the second alert means is activated when vibration of the seat or the steering wheel caused by the first alert means and vibration of the vehicle (vibration of the seat or the steering wheel) due to unevenness of a road surface coincide with each other.

### SUMMARY OF THE INVENTION

An object of the present invention is to allow a vehicle that provides driving support for steering to appropriately alert a driver to at least one of a state relating to the steering and a state relating to the driving support even when the driver is in a hands-off state.

A first aspect of the invention relates to an alert system installed in a vehicle that provides driving support for steering. The alert system includes: a first alert unit that alerts a driver to at least one of a state relating to the steering and a state relating to the driving support in a tactile manner through a steering wheel; a second alert unit that alerts the driver to at least one of the states either in a tactile manner through a member other than the steering wheel or in an audible or visual manner; a selection unit through which either the first alert unit or the second alert unit is selectable; a hands-off state determination unit that determines whether the driver is in a hands-off state in which the driver's hands are inferred to be off the steering wheel; and an alert control unit that activates the second alert unit when the first alert unit is selected through the selection unit and the driver is determined to be in the hands-off state by the hands-off state determination unit.

In the above aspect, the first alert unit and the second alert unit may be configured to alert the driver to a state that leads to an interruption in the driving support as the state relating to the driving support.

In the above aspect, the first alert unit and the second alert unit may be configured to alert the driver to a state in which the vehicle is highly likely to depart from a lane as the state relating to the steering.

A second aspect of the invention relates to a driving support system. The driving support system includes: a driving support device that provides driving support for steering of a vehicle; and an alert device that alerts a driver to an interruption in the driving support provided by the driving support device, the alert device includes: a steering wheel vibration unit that vibrates a steering wheel; a sound generation unit that generates sound; a selection unit through which either the steering wheel vibration unit or the sound generation unit is selected; and a hands-off state determination unit that determines whether the driver is in a hands-off state in which the driver's hands are inferred to be off the steering wheel, and an alert control unit that activates the sound generation unit when the steering wheel vibration unit is selected through the selection unit and the driver is determined to be in the hands-off state by the hands-off state determination unit.

In the above aspects, the driving support device may include a steering control device that automatically controls the steering of the vehicle by controlling a steering device, and the driving support device provides the driving support by automatically controlling the steering, and in a case where the driving support is to be interrupted as a prohibition condition is met while the steering control device is executing the automatic control of the steering, the alert control unit activates the sound generation unit when the steering wheel vibration unit is selected through the selection unit and the driver is determined to be in the hands-off state by the hands-off state determination unit.

A third aspect of the invention relates to a driving support system for a vehicle. The driving support system includes: a steering wheel vibration unit that vibrates a steering wheel; a sound generation unit that generates sound; a hands-off state determination unit that determines whether a driver of the vehicle is in a hands-off state in which the driver's hands are inferred to be off the steering wheel, and an alert control unit that activates the sound generation unit when the vehicle is highly likely to depart from a lane and the driver is determined to be in the hands-off state by the hands-off state determination unit.

In the above aspect, the driving support system may further include a selection unit through which either the steering wheel vibration unit or the sound generation unit is selected, wherein the alert control unit may activate the sound generation unit when the vehicle is highly likely to depart from the lane and the steering wheel vibration unit is selected through the selection unit and the driver is determined to be in the hands-off state by the hands-off state determination unit.

In the above aspect, the driving support system may further include a selection unit through which either the steering wheel vibration unit or the sound generation unit is selected, wherein the alert control unit may activate the sound generation unit, regardless of a selection made through the selection unit, when the vehicle is highly likely to depart from the lane and the driver is determined to be in the hands-off state by the hands-off state determination unit.

As described above, in this alert system, the second alert unit is activated when the driver is in the hands-off state and it is therefore difficult to alert the driver to "at least one of the state relating to the steering and the state relating to the driving support" through the steering wheel. The alert device described in JP 2008-040621 A, on the other hand, can alert the driver that "the vehicle is highly likely to depart from the lane" through vibration of the seat or the steering wheel, since the driver is in contact with the seat or the steering wheel. This alert device alerts the driver by the second alert means when vibration of the seat or the steering wheel due to unevenness of a road surface and vibration of the seat or the steering wheel caused by the first alert means coincide with each other and it is difficult to tell whether the vibration is that of the seat or the steering wheel caused by the first alert means or that of the seat or the steering wheel due to the unevenness of the road surface. Thus, the alert system of the present invention and the alert device described in JP 2008-040621 A differ from each other.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a flowchart showing a warning program that is stored in a storage unit of a driving support ECU of a driving support system that is an embodiment of the present invention, the driving support system including an alert system that is an embodiment of the present invention;
FIG. 2 is a block diagram conceptually showing a vehicle equipped with the driving support system;
FIG. 3 is a view showing a part of a display of the driving support system;
FIG. 4 is a flowchart showing an LKA control program stored in the storage unit of the driving support ECU;
FIG. 5 is a view showing a state of a vehicle when LKA control is executed;
FIG. 6 is a flowchart showing an LDP control program stored in the storage unit;
FIG. 7 is a view showing a state of the vehicle when LDP control is executed;
FIG. 8 is a flowchart showing an LDA control program stored in the storage unit;
FIG. 9 is a table showing activation conditions for LKA control, LDP control, and LDA control; and
FIG. 10 is a flowchart showing another warning program stored in the storage unit.

### DETAILED DESCRIPTION OF EMBODIMENTS

A driving support system according to an embodiment of the present invention will be described below based on the drawings. This driving support system includes an alert system according to an embodiment of the present invention.

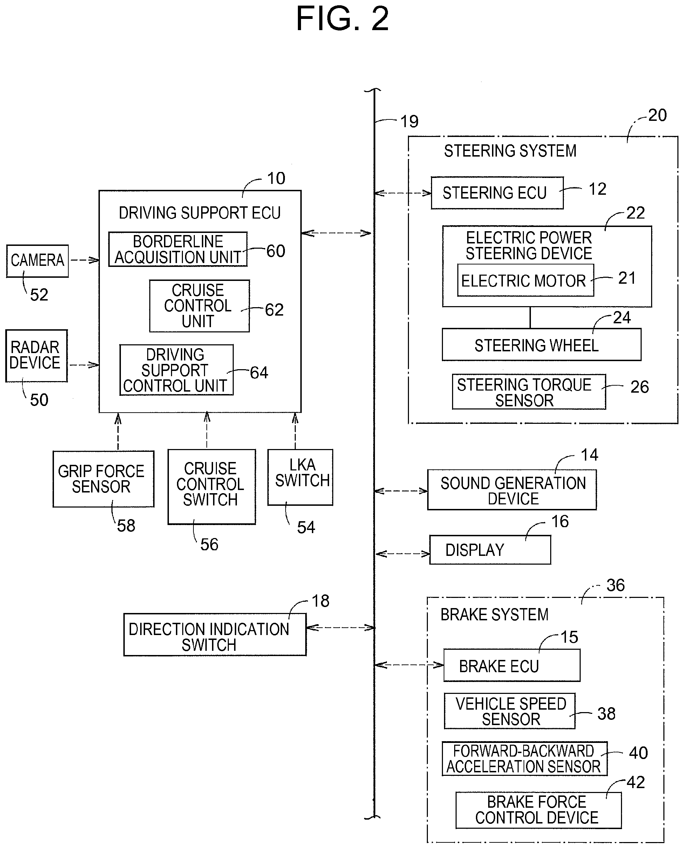

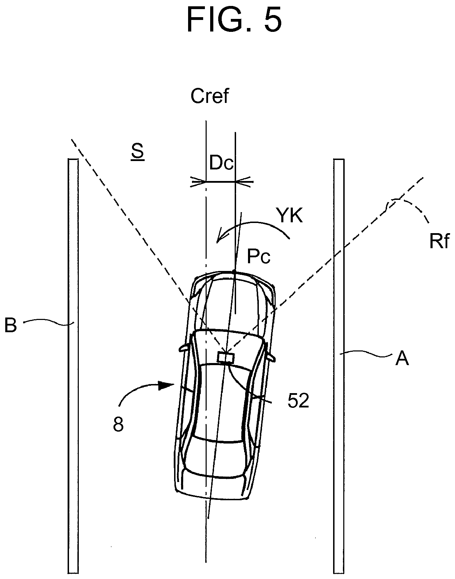

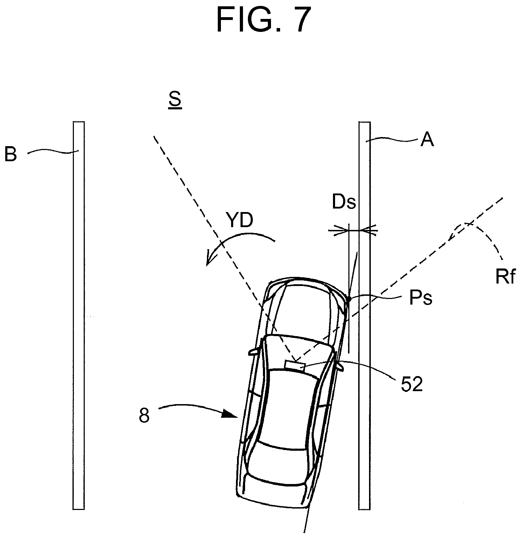

The driving support system according to this embodiment is installed in a vehicle 8 shown in FIG. 5 and FIG. 7. As shown in FIG. 2, the vehicle 8 includes a driving support electronic control unit (ECU) 10, a steering ECU 12, a sound generation device 14, a brake ECU 15, a display 16, a direction indication switch 18, etc. These components are communicably connected to one another through a controller area network (CAN) 19.

The steering ECU 12 is a component of a steering system 20, and is composed mainly of a computer including an execution unit, a storage unit, an input-output unit, etc. The steering system 20 includes an electric power steering device 22 equipped with an electric motor 21, a steering wheel 24, a steering torque sensor 26, etc., and the electric motor 21, the steering torque sensor 26, etc. are connected to the input-output unit of the steering ECU 12.

The electric power steering device 22 turns steered wheels by combining a steering torque that is applied to a steering mechanism by a driver through the steering wheel 24 and a steering torque that is applied to the steering mechanism by the electric motor 21. The steering torque applied to the steering mechanism by the electric motor 21 is controlled by the steering ECU 12 controlling the electric motor 21. For example, a steering torque in the same direction as steering operation of a driver is applied in some cases, and a steering torque in the opposite direction from the steering operation of the driver is applied in other cases. In some cases, the steering wheel 24 is vibrated by controlling the electric motor 21.

The steering torque sensor 26 detects a steering torque applied to a torsion bar, which is a component of the steering mechanism, by the driver through the steering wheel 24, and outputs a steering torque that is applied by turning the steering wheel 24 rightward as a positive value and a steering torque that is applied by turning the steering wheel 24 leftward as a negative value.

The sound generation device 14 outputs sound or voice, and includes a speaker, a buzzer, etc. (not shown). Based on an activation command from the driving support ECU 10, the sound generation device 14 is activated to generate sound or voice.

The brake ECU 15 is a component of a brake system 36, and is composed mainly of a computer including an execution unit, a storage unit, an input-output unit, etc. The brake system 36 includes a vehicle speed sensor 38 that detects the travel speed of the vehicle 8, a forward-backward acceleration sensor 40 that detects the rates of acceleration and deceleration of the vehicle 8 in forward and backward directions, a brake force control device 42 that can control the brake force of a brake provided for each wheel, etc. The vehicle speed sensor 38, the forward-backward acceleration sensor 40, the brake force control device 42, etc. are connected to the input-output unit of the brake ECU 15. The brake force control device 42 controls the brake force of the brake of each wheel so that slip of each wheel is kept in an appropriate amount determined by a road surface friction coefficient µ, and applies an automatic brake based on a positional relationship relative to an object in front, etc. Examples of the former brake control include antilock brake system (ABS) control and vehicle stability control (VSC). Another example is traction control (TRC), which is commonly executed by controlling a driving force but is sometimes executed by controlling the brake force of driving wheels. Examples of the latter automatic brake control include pre-crash safety (PSC) control in which the automatic brake is applied to avoid crashing into an object in front, and cruise control in which the automatic brake is applied to keep a constant distance to a vehicle in front.

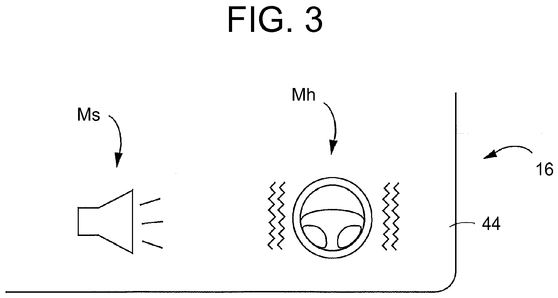

The direction indication switch 18 is a switch that can be operated by the driver, and indicates a direction of movement of the vehicle 8 (corresponding to a direction of steering operation) when the driver steers the vehicle. The display 16 displays various pieces of information, and functions also as an input unit that allows various settings, selections, inputs, etc. to be made through the display 16. For example, to issue a warning in this driving support system, the form of warning is selected and determined in a form-of-warning selection screen 44 of the display 16 shown in FIG. 3. The form-of-warning selection screen 44 includes an image Ms of a speaker and an image Mh of the steering wheel 24, and when the image Ms is clicked, "sound generation" is selected and determined as the form of warning, and when the image Mh is clicked, "vibration of the steering wheel 24" is selected and determined as the form of warning. While this is not shown, the contents of the driving support provided by this driving support system are set through the display 16. Specifically, whether or not to permit execution of lane keeping assist (LKA) control and whether or not to permit execution of lane departure prevention (LDP) control are each set through the display 16.

While this is not shown, the driving support ECU 10 is composed mainly of a computer including an execution unit, a storage unit, an input-output unit, etc., and a radar device 50, a camera 52, an LKA switch 54, a cruise control switch 56, a grip force sensor 58, etc. are connected to the input-output unit. The radar device 50 receives a reflected wave that is a radio wave in a millimeter waveband emitted forward and reflecting off a vehicle in front etc. The distance between the vehicle 8 and the vehicle in front, the speed of the vehicle 8 relative to the vehicle in front, etc. are acquired based on a change in frequency etc. of the received reflected wave. The camera 52 is provided behind a windshield of the vehicle 8, and takes images of a borderline, an object, etc. within a region Rf (see FIG. 5 and FIG. 7) in front of the vehicle 8. The LKA switch 54 can be operated by the driver, and is turned on to permit execution of one of LKA control, LDP control, and lane departure alert (LDA) control. The cruise control switch 56 can be operated by the driver, and is turned on to permit execution of cruise control. The grip force sensor 58 detects a grip force that is a force applied to the steering wheel 24. When a detection value (output value) of the grip force sensor 58 is smaller than a hands-off determination threshold value, the driver is considered to be in a hands-off state in which the driver's hands are inferred to be off the steering wheel 24.

The driving support ECU 10 includes a borderline acquisition unit 60, a cruise control unit 62, a driving support control unit 64, etc. The borderline acquisition unit 60 acquires the borderline by processing the images taken by the camera 52. In the image processing, edge points at which brightness, lightness, etc. suddenly change are extracted, and the borderline is acquired based on these edge points. Therefore, the borderline cannot always be acquired depending on the environmental conditions including the weather, brightness, and light. In addition, the borderline itself may not exist or have disappeared, and in such cases the borderline cannot be acquired, either.

The cruise control unit 62 controls the brake force control device 42 and a driving force control device (not shown) of the vehicle 8 (executes cruise control) so as to keep a constant distance between the vehicle 8 and the vehicle in front.

The driving support control unit 64 executes one or more of LKA (lane keeping assist) control, LDP (lane departure prevention) control, and LDA (lane departure alert) control as the driving support, and controls the power steering device 22, the sound generation device 14, etc. during LKA control, LDP control, and LDA control. In this embodiment, in a case where the LKA switch 54 is turned on, when both "LKA control" and "LDP control" are set through the display 16, execution of LKA control, LDP control, and LDA control is permitted. When "LDP control" is set, execution of LDP control and LDA control is permitted, and when neither "LKA control" nor "LDP control" is set, execution of LDA control is permitted.

LKA control will be described. LKA control is steering control (lane keeping control) that is executed so that the vehicle 8 travels along a target travel line Cref inside a lane S that is a lane in which the vehicle 8 is travelling. For example, as shown in FIG. 5, the target travel line Cref can be set at the center of the lane S, i.e., in the middle between borderlines A, B on both sides of the lane S acquired by the borderline acquisition unit 60. When a center distance Dc that is a distance in a road width direction between the target travel line Cref and a point (e.g., a point Pc) on a line passing through roughly the center of the vehicle 8 becomes larger than a start threshold value Dca, a steering torque YK in a direction in which the center distance Dc is reduced is applied. When the center distance Dc becomes smaller than an end threshold value Dcb (Dcb < Dca), LKA control is ended and the steering torque YK having been applied is set to zero. For example, the magnitude of the steering torque YK applied during LKA control can be set to a larger value when the center distance Dc is larger than when the center distance Dc is smaller.

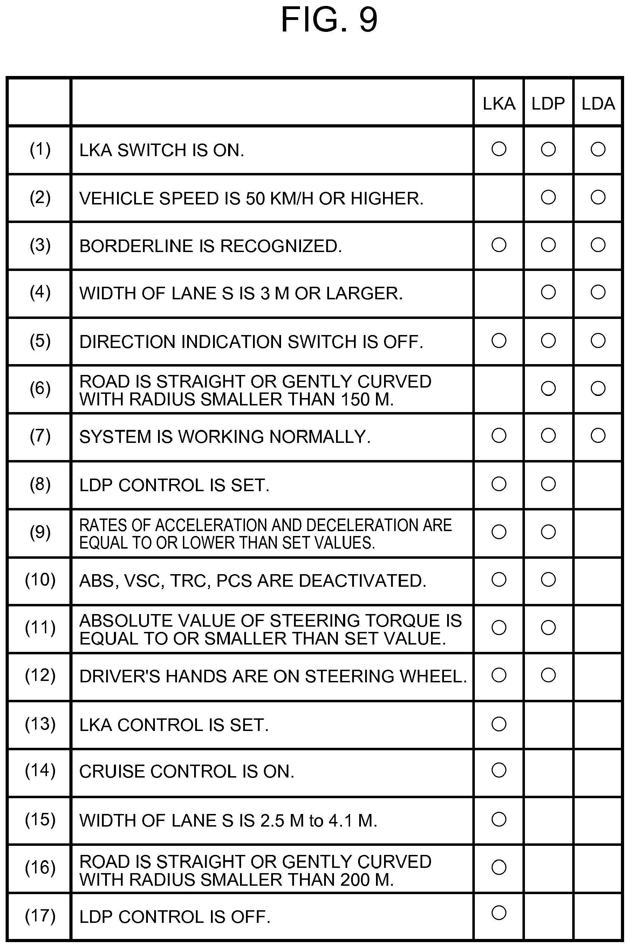

LKA control is permitted when activation conditions for LKA control (hereinafter referred to as LKA activation conditions) are met, and is prohibited when the LKA activation conditions are not met. Starting LKA control is prohibited when the LKA activation conditions are not met before LKA control is started, and LKA control is ended, i.e., interrupted when the LKA activation conditions are no longer met during LKA control. The LKA activation conditions are determined to be met when all the conditions (1), (3), (5), (7) to (17) shown in FIG. 9 are met, and are determined to be not met when at least one of the conditions (1), (3), (5), (7) to (17) shown in FIG. 9 is not met. Examples of the LKA activation conditions include that (14) cruise control is on and that (17) LDP control is off. For the condition (10), whether ABS, VSC, TRC, and PCS are deactivated can be acquired based on information from the brake ECU 15 or a driving force ECU (not shown) etc.

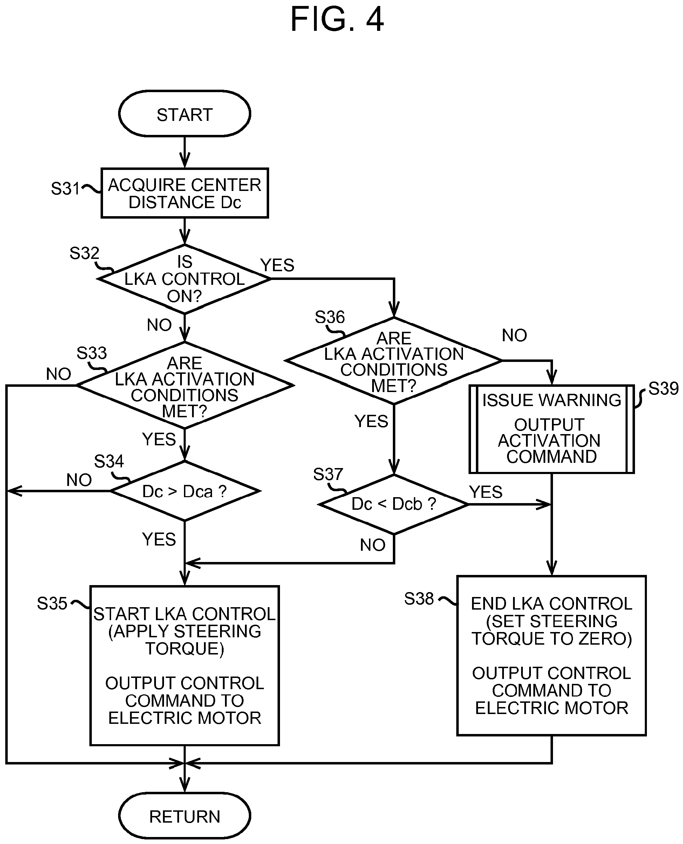

LKA control is executed in accordance with an LKA control program represented by the flowchart of FIG. 4. In step 31 (hereinafter abbreviated as S31; the same applies to other steps), the center distance Dc etc. are read, and it is determined in S32 whether LKA control is on. When LKA control is off, it is determined in S33 whether the LKA activation conditions are met. When the LKA activation conditions are met, it is determined in S34 whether the center distance Dc is larger than the start threshold value Dca. When the center distance Dc is larger than the start threshold value Dca, in S35, a control command for the electric motor 21 is output to the steering ECU 12 so that the steering torque YK in a direction in which the center distance Dc is reduced, i.e., in a direction in which the vehicle 8 is brought closer to the target travel line Cref is applied. As the steering ECU 12 controls the electric motor 21, the steering torque YK in the direction in which the center distance Dc is reduced is applied in the power steering device 22.

On the other hand, when the LKA activation conditions are not met, the determination result in S33 is NO. Accordingly, S34, S35 are not executed, and starting LKA control is prohibited regardless of the length of the center distance Dc.

When LKA control is on, the determination result in S32 is YES, and it is determined in S36 whether the LKA activation conditions are met. When the LKA activation conditions are met, it is determined in S37 whether the center distance Dc is smaller than the end threshold value Dcb. When the center distance Dc is not smaller than the end threshold value Dcb, the determination result in S37 is NO, and S35 is executed. When the center distance Dc is not smaller than the end threshold value Dcb, S31, S32, S36, S37, S35 are repeatedly executed and LKA control is continuously executed. When the center distance Dc becomes smaller than the end threshold value Dcb in the process, the determination result in S37 becomes YES, and in S38, a control command for setting the steering torque YK having been applied to zero is output to the steering ECU 12. As the steering ECU 12 controls the electric motor 21, the steering torque YK having been applied is set to zero and LKA control is ended.

On the other hand, when the LKA activation conditions are no longer met during LKA control, the determination result in S36 becomes NO. In S39, an activation command (control command) is output to the sound generation device 14 or the steering ECU 12 so that a warning is issued, and in S38, a control command for setting the steering torque YK to zero is output to the steering ECU 12. LKA control is interrupted also when the center distance Dc is not smaller than the end threshold value Dcb, and a warning is issued in this case. This warning will be described later.

Next, LDP control will be described. LDP control is steering control (lane departure prevention control) that is executed so that the vehicle 8 does not depart from the lane S. For example, when a side distance Ds that is a distance in the road width direction between a point (e.g., a point Ps) on a line passing through a side end of the vehicle 8 and the borderline A is smaller than a start threshold value Dsp, a steering torque YD in a direction in which the side distance Ds is increased, i.e., in a direction in which the vehicle 8 is directed toward the center of the lane S is applied. When the side distance Ds becomes larger than an end threshold value Dsq (Dsq > Dsp), LDP control is ended.

LDP control is permitted when activation conditions for LDP control (hereinafter referred to as LDP activation conditions) are met, and is prohibited when the LDP activation conditions are not met. The LDP activation conditions are determined to be met when all the conditions (1) to (12) shown in FIG. 9 are met, and are determined to be not met when at least one of the conditions (1) to (12) is not met. Examples of the LDP activation conditions include that (2) the vehicle speed is 50 km/h or higher and that (4) the width of the lane S is 3 m or larger.

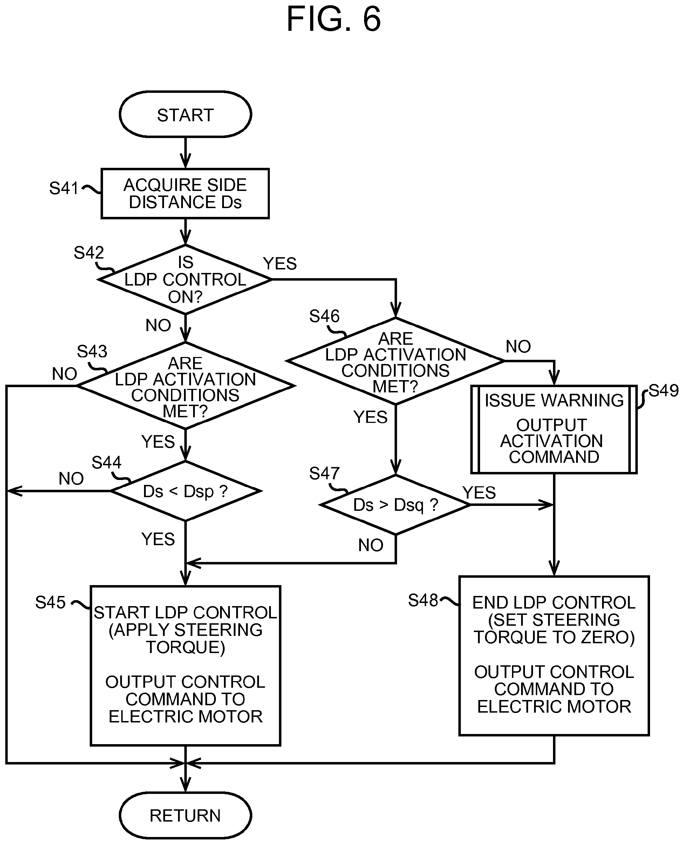

LDP control is executed in accordance with an LDP control program represented by the flowchart of FIG. 6. In S41, the side distance Ds etc. are read, and it is determined in S42 whether LDP control is on. When LDP control is off, it is determined in S43 whether the LDP activation conditions are met. When the LDP activation conditions are met, it is determined in S44 whether the side distance Ds is smaller than the start threshold value Dsp. When the determination result is YES, in S45, a control command for the electric motor 21 is output to the steering ECU 12, and the steering torque YD in a direction in which the side distance Ds is increased is applied. The magnitude of the steering torque YD can be set to a larger value when the side distance Ds is smaller than when the side distance Ds is larger.

On the other hand, when the LDP activation conditions are not met, the determination result in S43 is NO. Accordingly, starting LDP control is prohibited regardless of the length of the side distance Ds.

When LDP control is on, the determination result in S42 is YES, and it is determined in S46 whether the LDP activation conditions are met. When the LDP activation conditions are met, it is determined in S47 whether the side distance Ds is larger than the end threshold value Dsq. When the side distance Ds is not larger than the end threshold value Dsq, the determination result is NO and LDP control is continuously executed. When the side distance Ds becomes larger than the end threshold value Dsq in the process, in S48, a control command for setting the steering torque YD to zero is output and LDP control is ended. On the other hand, when the LDP activation conditions are no longer met during LDP control, the determination result in S46 becomes NO. In S49, an activation command (control command) is output to the sound generation device 14 or the steering ECU 12 so that a warning is issued, and in S48, a control command for setting the steering torque YD to zero is output.

Next, LDA control will be described. LDA control is control (lane departure alert control) involving issuing a warning when the vehicle 8 is highly likely to depart from the lane S. A warning is issued when the side distance Ds is smaller than a start threshold value Dsx, and the warning is stopped when the side distance Ds becomes equal to or larger than an end threshold value Dsy. The start threshold value Dsx and the end threshold value Dsy are respectively smaller than the start threshold value Dsp and the end threshold value Dsq of LDP control (Dsx < Dsp, Dsy < Dsq).

Activation conditions for LDA control (hereinafter referred to as LDA activation conditions) are determined to be met when all the conditions (1) to (7) shown in FIG. 9 are met. The LDA activation conditions are included in the LDP activation conditions.

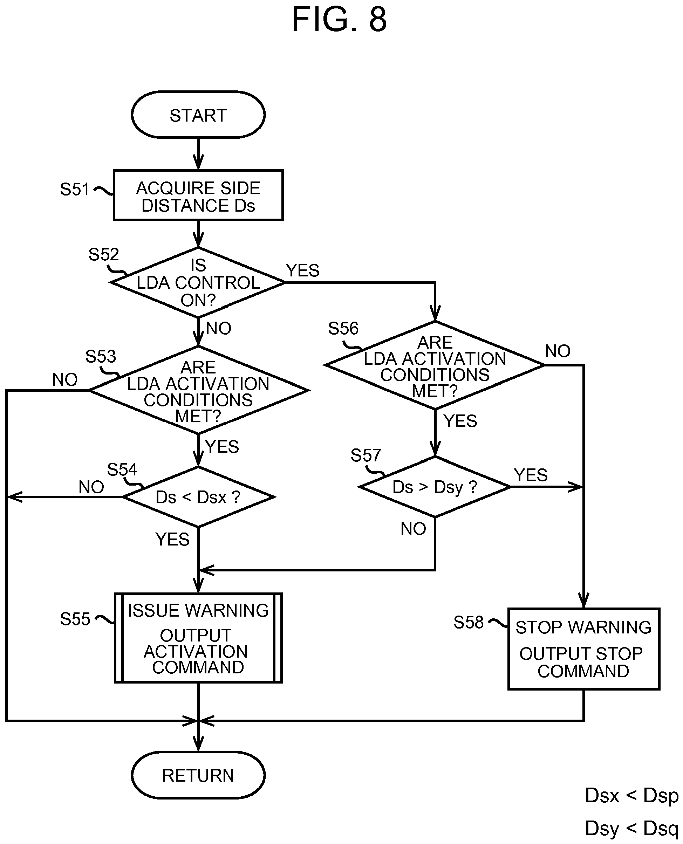

LDA control is executed in accordance with an LDA control program represented by the flowchart of FIG. 8. When LDA control is off, it is determined in S53 whether the LDA activation conditions are met. When the LDA activation conditions are met, it is determined in S54 whether the side distance Ds is smaller than the start threshold value Dsx. When the determination result is YES, in S55, an activation command (control command) is output to the sound generation device 14 or the steering ECU 12 so that a warning is issued.

When LDA control is on and the LDA activation conditions are met, it is determined in S57 whether the side distance Ds is larger than the end threshold value Dsy. When the side distance Ds is not larger than the end threshold value Dsy, a warning is continuously issued. When the side distance Ds becomes larger than the end threshold value Dsy, in S58, a warning stop command is output and LDA control is ended. On the other hand, when the LDA activation conditions are no longer met, the determination result in S56 becomes NO, and S58 is executed.

Each of LKA control, LDP control, and LDA control has been described above. In the case where, as described above, LKA control is not set but LDP control is set so that both LDP control and LDA control can be executed, for example, LDP control and LDA control can be executed in the following manners: (a) Execute the LDP control program when the LDP activation conditions are met, and execute the LDA control program when the LDP activation conditions are not met; (b) Execute the LDP control program and the LDA control program in parallel with each other; and (c) Execute a program combining these two programs.

In the case where LKA control and LDP control are set so that all LKA control, LDP control, and LDA control can be executed, for example, these LKA control, LDP control, and LDA control can be executed in the following manners: (a) Execute the LKA control program when the LKA activation conditions are met, and execute the LDP control program or the LDA control program when the LKA activation conditions are not met, and execute the LDA control program when the LKA activation conditions and the LDP activation conditions are not met; (b) Execute all the LKA control program, the LDP control program, and the LDA control program in parallel with one another; (c) Execute a program combining these three programs.

Next, the warning will be described. As described above, in the case where LKA control or LDP control is to be interrupted as the LKA activation conditions or the LDP activation conditions are no longer met during LKA control or LDP control, the warning is issued (one form of alert) in LDA control when the vehicle 8 is highly likely to depart from the lane S. The warning in this case is issued in the form of warning (one form of alert) selected by the driver. However, in the case where the "vibration of the steering wheel 24" is selected and determined as the form of warning by the driver, if the driver is in the hands-off state, or if the LKA activation conditions or the LDP activation conditions are no longer met because of the hands-off state, it is difficult to alert the driver, by vibrating the steering wheel 24, that LKA control or LDP control is interrupted and that the vehicle 8 is highly likely to depart from the lane S. In this embodiment, therefore, the warning is issued through "sound generation" when the "vibration of the steering wheel 24" is selected but the driver is in the hands-off state.

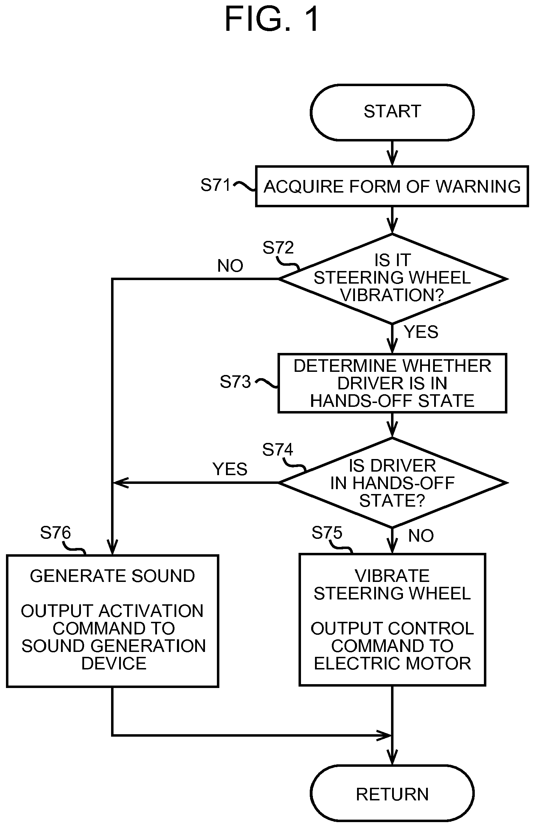

In S39, S49, S55, a warning routine represented by the flowchart of FIG. 1 is executed. In S71, the form of warning selected through the display 16 is acquired, and it is determined in S72 whether the selected form of warning is the "vibration of the steering wheel 24." When the determination result is YES, in S73, the detection value of the grip force sensor 58 is read, and it is determined in S74 whether the detection value is smaller than the hands-off determination threshold value and therefore the driver is in the hands-off state. When the driver is not in the hands-off state, in S75, a control command for the electric motor 21 is output to the steering ECU 12 so that the warning is issued through the "vibration of the steering wheel 24" according to the selected form of warning. On the other hand, when the driver is in the hands-off state, in S76, an activation command is output to the sound generation device 14 so that the warning is issued through "sound generation." When the selected form of warning is "sound generation," whether the driver is in the hands-off state is not determined, and in S76, an activation command is output to the sound generation device 14.

When this routine is executed in S39, S49, the warning is stopped after being issued for a set time in S75, S76. When this routine is executed in S55, the warning is issued in S75, S76, and the warning is stopped in S58. Alternatively, when this routine is executed in S39, S49, for example, the warning may be issued while the driver is determined to be in the hands-off state, or the warning may be issued until it becomes hardly likely that the vehicle 8 may depart from the lane S.

Thus, in this embodiment, to alert the driver to the state of the driving support (the state that leads to an interruption in LKA control or LDP control) and the state of the steering (the state in which the vehicle 8 is highly likely to depart from the lane S and it is highly necessary for the driver to steer the vehicle), when the "vibration of the steering wheel 24" is selected, whether the driver is in the hands-off state is determined, and the form of warning is switched to "sound generation" when the driver is determined to be in the hands-off state. As a result, it is possible to appropriately alert the driver to the state of the driving support and the state of the steering even when the driver is in the hands-off state. For example, when LKA control or LDP control is set, the driver tends to feel safe and take his or her hands off the steering wheel, as the vehicle 8 is hardly likely to depart from the lane S. Accordingly, it is highly necessary to alert the driver when LKA control or LDP control is interrupted. On the other hand, the "vibration of the steering wheel 24" may be selected because selecting the "sound generation" creates an inconvenience such as that the warning sound will be heard by all passengers. In this embodiment, therefore, in the case where LKA control or LDP control is interrupted, when the "vibration of the steering wheel 24" is selected but the driver is in the hands-off state, the warning is issued through the "sound generation." Thus, it is possible to appropriately alert the driver that LKA control or LDP control is to be interrupted, even when the driver feels safe as LKA control or LDP control is executed and takes his or her hands off the steering wheel 24.

Thus, in this embodiment, the display 16 etc. functions as the "selection unit"; the electric power steering device 22, the electric motor 21 of the steering ECU 12, etc. functions as the "steering wheel vibration unit"; and the steering wheel vibration unit, the steering wheel 24, etc. function as the "first alert unit." The sound generation device 14 functions as the "sound generation unit" or the "second alert unit." The units of the driving support ECU 10 that store and execute S75, S76 function as the "alert control unit," and the grip force sensor 58 etc. functions as the "hands-off state determination unit." The power steering device 22 functions as the "steering device," and the electric motor 21, the steering ECU 12, the units of the driving support ECU 10 that store and execute S35, S38, S45, S48, etc. function as the "steering control device." The steering control device, the steering device, etc. function as the "driving support device." The sound generation device 14, the steering wheel vibration unit, the steering wheel 24, etc. function as the "alert device." That at least either the LKA activation conditions or the LDP activation conditions are not met relates to the "prohibition condition."

In the above embodiment, whether the driver is in the hands-off state is determined based on the detection value of the grip force sensor 58. Alternatively, for example, the driver may be determined to be in the hands-off state when the absolute value of the detection value of the steering torque sensor 26 is smaller than a set torque. The second alert unit may alternatively be a unit that, for example, vibrates a seat on which the driver is seated, flashes a light, or generates voice. The first alert unit is not limited to the unit that vibrates the steering wheel 24, but may be any unit that can alert the driver to information in a tactile manner through the steering wheel 24, for example, by moving the steering wheel 24.

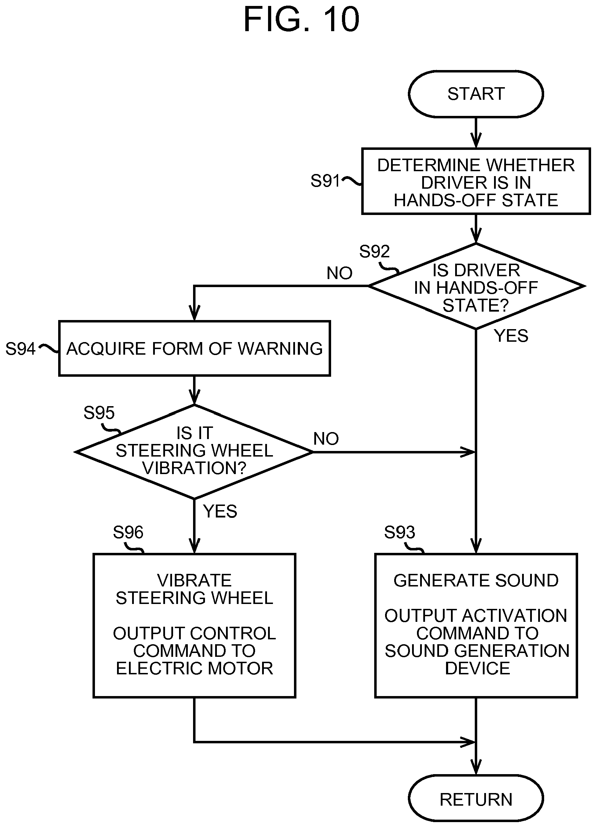

Alternatively, the warning in S39, S49, S55 may be issued in accordance with the routine shown in FIG. 10. In this embodiment, when the driver is determined in the hands-off state in S91, S92, in S93, an activation command is output to the sound generation device 14 regardless of the selected form of warning. On the other hand, when the driver is not in the hands-off state, in S94 to S96, the warning is issued in the form of warning selected by the driver. Thus, in this embodiment, when the driver is in the hands-off state, the warning is issued through the "sound generation" regardless of the selected form of warning.

In the above embodiment, the case where the driving support system and the alert system include a plurality of computers has been described, but the number of computers included in these systems may be one. Thus, the present invention can be implemented in various forms with various modifications and improvements made thereto based on the knowledge of those skilled in the art.

The following items describe claimable inventions in the present application:
(1) An alert system that is installed in a vehicle that provides driving support for steering, and alerts a driver to at least one of a state relating to the steering and a state relating to the driving support, the alert system including: a first alert unit that alerts the driver to at least one of the states in a tactile manner through a steering wheel; a second alert unit that alerts the driver to at least one of the states either in a tactile manner through a member other than the steering wheel or in an audible or visual manner; a selection unit through which either the first alert unit or the second alert unit is selectable; and a hands-off state determination unit that determines whether the driver is in a hands-off state in which the driver's hands are inferred to be off the steering wheel, wherein the alert system further includes an alert control unit that activates the second alert unit when the first alert unit is selected through the selection unit and the driver is determined to be in the hands-off state by the hands-off state determination unit.
   Examples of the driving support for steering of the vehicle include: (a) driving support involving controlling the steering so that the vehicle does not depart from the lane; (b) driving support involving controlling the steering so that the vehicle travels along the target travel line; (c) driving support involving controlling the steering so that the vehicle avoids an object in front; and (d) driving support involving alerting the driver that the vehicle is highly likely to depart from the lane and that it is highly necessary for the driver to steer the vehicle.
   Steering control is control involving automatically applying a rightward or leftward steering torque to the steering mechanism by activating an actuator such as an electric motor. Sometimes the steered wheels are turned, and other times the steered wheels are not turned, when the steering torque is applied to the steering mechanism. In some cases, the steering torque applied to the steering mechanism makes it difficult to turn the steering wheel in the opposite direction from the direction of the steering torque.
   Examples of the state relating to the steering of the vehicle include a state in which, while the driving supports (a) to (d) are provided, it is highly necessary for the driver to steer the vehicle. Examples of the state relating to the driving support include a state that leads to an interruption in steering control of the driving supports (a) to (c) while these driving supports are provided.
(2) The alert system according to item (1), wherein the first alert unit alerts the driver to at least one of the states in a tactile manner by vibrating the steering wheel, and wherein the second alert unit alerts the driver to at least one of the states by generating sound or voice.
(3) The alert system according to item (1) or (2), wherein the hands-off state determination unit includes a steering torque sensor that detects a steering torque applied to a steering mechanism through the steering wheel, and wherein the hands-off state determination unit determines that the driver is in the hands-off state when the absolute value of a detection value of the steering torque sensor is smaller than a set torque. This set torque is a form of the hands-off determination threshold value.
(4) The alert system according to item (1) or (2), wherein the hands-off state determination unit includes a grip force sensor that is provided in the steering wheel and detects a grip force applied to the steering wheel, and wherein the hands-off state determination unit determines that the driver is in the hands-off state when a detection value of the grip force sensor is smaller than a set grip force. This set grip force is a form of the hands-off determination threshold value.
(5) The alert system according to any one of items (1) to (4), wherein the alert system alerts the driver to a state that leads to an interruption in the driving support as the state relating to the driving support. It is often the case that the driver feels safe while the driving support is provided. It is therefore desirable to alert the driver when the driving support is to be interrupted. For example, when the prohibition condition for the driving support is met (the activation conditions for the driving support are no longer met), the driving support is ended while the vehicle is travelling.
(6) The alert system according to any one of items (1) to (5), wherein the alert system alerts the driver to a state that leads to an interruption in the driving support due to failure of acquiring borderlines defining a lane in which the vehicle is travelling as the state relating to the driving support.
(7) The alert system according to any one of items (1) to (6), wherein the alert system alerts the driver to a state in which the vehicle is highly likely to depart from the lane as the state relating to the steering.
(8) An alert system that is installed in a vehicle that provides driving support for steering, and alerts a driver that it is highly necessary for the driver to steer the vehicle, the alert system including: a first alert unit that alerts the driver to at least one of a state relating to the driving support and a state relating to the steering in a tactile manner through a steering wheel; a second alert unit that alerts the driver to at least one of the states either in a tactile manner through a member other than the steering wheel or in an audible or visual manner; a selection unit through which either the first alert unit or the second alert unit is selectable; and a hands-off state determination unit that determines whether the driver is in a hands-off state in which the driver's hands are inferred to be off the steering wheel, wherein the alert system further includes an alert control unit that activates the second alert unit when the first alert unit is selected through the selection unit and the driver is determined to be in the hands-off state by the hands-off state determination unit. A state that leads to an interruption in the driving support and a state in which the vehicle is highly likely to depart from the lane can be considered as states in which it is highly necessity for the driver to steer the vehicle. The alert system according to this item can adopt the technical features according to any one of items (1) to (7).
(9) A driving support system including: a driving support device that provides driving support for steering of a vehicle; and an alert device that alerts a driver to an interruption in the driving support provided by the driving support device, wherein the alert device includes a steering wheel vibration unit that vibrates a steering wheel, a sound generation unit that generates sound or voice, a selection unit through which either the sound generation unit or the steering wheel vibration unit is selected, and a hands-off state determination unit that determines whether the driver is in a hands-off state in which the driver's hands are inferred to be off the steering wheel, and wherein the driving support system further includes an alert control unit that activates the sound generation unit when the steering wheel vibration unit is selected through the selection unit and the driver is determined to be in the hands-off state by the hands-off state determination unit.
(10) The driving support system according to item (9), wherein the driving support device includes a steering control device that automatically controls the steering of the vehicle by controlling a steering device, and the driving support device provides the driving support by automatically controlling the steering, and wherein, in a case where the driving support is to be interrupted as a prohibition condition is met while the steering control device is executing the automatic control of the steering, the alert control unit activates the sound generation unit when the steering wheel vibration unit is selected through the selection unit and the driver is determined to be in the hands-off state by the hands-off state determination unit. For example, this driving support device executes lane departure prevention control of controlling the steering device so that the vehicle does not depart from the lane, lane keeping control of controlling the steering device so that the vehicle travels along the target travel line, and collision avoidance control of controlling the steering device so that the vehicle avoids an object in front.
(11) A driving support system that includes an alert device that alerts a driver to a state relating to steering of a vehicle, and provides support in driving the vehicle by activating the alert device when the vehicle is highly likely to depart from a lane, wherein the alert device includes a steering wheel vibration unit that vibrates a steering wheel, a sound generation unit that generates sound or voice, and a hands-off state determination unit that determines whether the driver is in a hands-off state in which the driver's hands are inferred to be off the steering wheel, and wherein the driving support system further includes an alert control unit that activates the sound generation unit when the vehicle is highly likely to depart from the lane and the driver is determined to be in the hands-off state by the hands-off state determination unit.
(12) The driving support system according to item (11), wherein the driving support system includes a selection unit through which either the steering wheel vibration unit or the sound generation unit is selected, and wherein the alert control unit activates the sound generation unit when the vehicle is highly likely to depart from the lane and the steering wheel vibration unit is selected through the selection unit and the driver is determined to be in the hands-off state by the hands-off state determination unit.
(13) The driving support system according to item (11), wherein the driving support system includes a selection unit through which either the steering wheel vibration unit or the sound generation unit is selected, and wherein the alert control unit activates the sound generation unit, regardless of a selection made through the selection unit, when the vehicle is highly likely to depart from the lane and the driver is determined to be in the hands-off state by the hands-off state determination unit.
(14) A warning system that is provided in a vehicle that provides driving support for steering, and issues a warning in at least one of a case where the vehicle is highly likely to depart from a lane and a case where the driving support is to be interrupted, the warning system including: a steering wheel vibration unit that vibrates a steering wheel in at least one of the cases; a warning sound generation unit that generates a warning sound in at least one of the cases; a selection unit through which either the steering wheel vibration unit or the warning sound generation unit is selectable; and a hands-off state determination unit that determines whether the driver is in a hands-off state in which the driver's hands are inferred to be off the steering wheel, wherein the warning system further includes a warning control unit that activates the warning sound generation unit in at least one of the cases, when the steering wheel vibration unit is selected through the selection unit and the driver is determined to be in the hands-off state by the hands-off state determination unit. The warning system according to this item can adopt the technical features according to any one of items (1) to (13). The warning sound generation unit corresponds to the "sound generation unit"; the warning control unit corresponds to the "alert control unit"; and the warning system corresponds to the "alert system."

## Claims

1. An alert system installed in a vehicle that provides driving support for steering, the alert system comprising:
a first alert unit (21) that alerts a driver to at least one of a state relating to the steering and a state relating to the driving support in a tactile manner through a steering wheel;
a second alert unit (14) that alerts the driver to at least one of the states either in a tactile manner through a member other than the steering wheel or in an audible or visual manner;
a selection unit (16) through which either the first alert unit (21) or the second alert unit (14) is selectable;
a hands-off state determination unit (58) that determines whether the driver is in a hands-off state in which the driver's hands are inferred to be off the steering wheel (24); and
an alert control unit (10) that activates the second alert unit (14) when the first alert unit (21) is selected through the selection unit (16) and the driver is determined to be in the hands-off state by the hands-off state determination unit (58).

2. The alert system according to claim 1, wherein the first alert unit (22, 12, 21, 24) and the second alert unit (14) are configured to alert the driver to a state that leads to an interruption in the driving support as the state relating to the driving support.

3. The alert system according to claim 1 or 2, wherein the first alert unit (22, 12, 21, 24) and the second alert unit (14) are configured to alert the driver to a state in which the vehicle is highly likely to depart from a lane as the state relating to the steering.

4. A driving support system comprising:
a driving support device (10) that provides driving support for steering of a vehicle; and
an alert device (14, 21) that alerts a driver to an interruption in the driving support provided by the driving support device (10), the alert device (14, 21) includes:
a steering wheel vibration unit (21) that vibrates a steering wheel (24);
a sound generation unit (14) that generates sound;
a selection unit (16) through which either the steering wheel vibration unit (21) or the sound generation unit (14) is selected; and
a hands-off state determination unit (58) that determines whether the driver is in a hands-off state in which the driver's hands are inferred to be off the steering wheel (24), and
an alert control unit (10) that activates the sound generation unit (14) when the steering wheel vibration unit (21) is selected through the selection unit (16) and the driver is determined to be in the hands-off state by the hands-off state determination unit (58).

5. The driving support system according to claim 4, wherein
the driving support device (10) includes a steering control device (20) that automatically controls the steering of the vehicle by controlling a steering device, and the driving support device (10) provides the driving support by automatically controlling the steering, and
in a case where the driving support is to be interrupted as a prohibition condition is met while the steering control device (20) is executing the automatic control of the steering, the alert control unit (10) activates the sound generation unit (14) when the steering wheel vibration unit (21) is selected through the selection unit (16) and the driver is determined to be in the hands-off state by the hands-off state determination unit (58).

6. A driving support system for a vehicle comprising:
a steering wheel vibration unit (21) that vibrates a steering wheel (24);
a sound generation unit (14) that generates sound;
a hands-off state determination unit (58) that determines whether a driver of the vehicle is in a hands-off state in which the driver's hands are inferred to be off the steering wheel (24), and
an alert control unit (10) that activates the sound generation unit (14) when the vehicle is highly likely to depart from a lane and the driver is determined to be in the hands-off state by the hands-off state determination unit (58).

7. The driving support system according to claim 6, further comprising
a selection unit (16) through which either the steering wheel vibration unit (21) or the sound generation unit (14) is selected, wherein
the alert control unit (14) activates the sound generation unit (14) when the vehicle is highly likely to depart from the lane and the steering wheel vibration unit (21) is selected through the selection unit (16) and the driver is determined to be in the hands-off state by the hands-off state determination unit (58).

8. The driving support system according to claim 6, further comprising
a selection unit (16) through which either the steering wheel vibration unit (21) or the sound generation unit (14) is selected, wherein
the alert control unit (10) activates the sound generation unit (14), regardless of a selection made through the selection unit (16), when the vehicle is highly likely to depart from the lane and the driver is determined to be in the hands-off state by the hands-off state determination unit (58).
